# EUROPÄISCHE PATENTSCHRIFT

(11) **EP 3 589 485 B1**
(45) Veröffentlichungstag und Bekanntmachung des Hinweises auf die Patenterteilung: **17.08.2022**
(21) Anmeldenummer: 17710681.2
(22) Anmeldetag: 03.03.2017
(51) Int. Cl.: B32B 15/01, C21D 1/70, H01F 3/04, H01F 27/25, H01F 41/02

(54) **VERBUNDWERKSTOFF FÜR EIN STATOR- UND ROTORPAKET**
COMPOSITE MATERIAL FOR A STATOR STACK AND ROTOR STACK
MATÉRIAU COMPOSITE POUR PAQUET STATORIQUE ET ROTORIQUE

(43) Veröffentlichungstag der Anmeldung: 08.01.2020
(73) Patentinhaber: ThyssenKrupp Steel Europe AG, 47166 Duisburg (DE); thyssenkrupp AG, 45143 Essen (DE)
(72) Erfinder: LEWE, Tobias, 48147 Münster (DE); TIETZ, Marco, 40489 Düssedorf (DE); DREWES, Stephan, 41236 Mönchengladbach (DE); GRUNDEN, Philipp, 99094 Erfurt (DE); TELGER, Karl, 48653 Coesfeld (DE); MÜLLER, Johann, 44581 Castrop-Rauxel (DE); KAHVECI, Abdullah, 44807 Bochum (DE)
(74) Vertreter: ThyssenKrupp Steel Europe AG
(86) Internationale Anmeldenummer: PCT/EP2017/055059
(87) Internationale Veröffentlichungsnummer: WO 2018/157943

(56) Entgegenhaltungen:
- EP-A1- 0 305 966
- WO-A2-2009/101129

## Beschreibung

### Technisches Gebiet

Die vorliegende Anmeldung betrifft einen Verbundwerkstoff, insbesondere zur Anwendung in einem Stator- und/oder Rotorpaket sowie ein Verfahren zur Herstellung des erfindungsgemäßen Verbundwerkstoffs. In einem weiteren Aspekt betrifft die vorliegende Erfindung ein Stator- und Rotorpaket sowie ein Verfahren zur Herstellung eines Stator- und/oder Rotorpakets. Weiterhin betrifft die vorliegende Erfindung einen Elektromotor sowie einen Generator.

### Technischer Hintergrund

In der EP 0305966 A1 wird das Beschichten eines kornorientierten Bandes mit einer organischen Schicht geschrieben. Die WO 2009101129 A2 offenbart ein Verfahren zur Herstellung eines mit einer Phosphatschicht belegten kornorientierten Elektrobandes. Verbundwerkstoffe mit zwei Elektrobandschichten und eine dazwischen angeordnete polymere Schicht werden nicht beschrieben.

Die Qualität des Innenraums von Autos spielt eine immer größere Rolle. Neben Geruch, Haptik und Optik ist die Geräuschkulisse ein weiterer Bestandteil eines modernen Innenraumkonzepts. Insbesondere bei elektrisch angetriebenen Autos (E-Autos) müssen aufgrund der Reichweitenproblematik weiterhin bei der Wahl der Mittel, die die Geräuschbelastung mindern, Kompromisse eingegangen werden, die jedoch zu Lasten der Qualität gehen.

Zur Verringerung der Geräuschbelastung kommen nach aktuellem Stand der Technik verschiedene sekundäre Akustikmaßnahmen zum Einsatz. Die wohl am häufigsten eingesetzten Mittel sind Dämm-Matten. Weitere aus dem Stand der Technik bekannte Mittel, die die Geräuschbelastung mindern sind körperschalldämpfende Verbundbleche aus denen entsprechende Karosserieteile hergestellt werden.

Auch ist der Einsatz von derartigen körperschalldämpfenden Verbundblechen in Elektromotoren u.a. zur Reduzierung der Geräuschbelastung aus dem Stand der Technik bekannt. So offenbart beispielsweise die US 6,499,209 B1 ein aus einer Vielzahl von Verbundblechen hergestelltes Stator- und Rotorpaket. Die einzelnen Verbundbleche bestehen hierbei aus zwei äußeren magnetischen Schichten und einer dazwischen angeordneten ca. 25 µm dicken viskoelastischen Folie auf Basis eines vernetzten Acrylpolymers.

Ein weiteres aus dem Stand der Technik bekanntes Verbundblech ist unter dem Markennamen Bondal^{®} CPT bekannt. Das Verbundblech besteht aus zwei äußeren einfachen Stahldeckblechen, diese weisen keine definierten weichmagnetische Eigenschaften auf, und einer dazwischen angeordneten 40 µm dicken polymeren Schicht.

Solche Systeme zeigen zwar die erforderlichen akustischen Eigenschaften und aufgrund der entsprechend großen Schichtdicken geeignete Haftungswerte, allerdings weisen die bekannten Systeme weiterhin nicht die für die Anwendung in einem Stator- und/oder Rotorpaket ausreichenden magnetischen Eigenschaften sowie unter Verwendung dieser in einem Stator-und/oder Rotorpaket erzielbaren Eisenfüllfaktoren. Es besteht daher weiteres Entwicklungspotential dieser Verbundbleche.

### Zusammenfassung der Erfindung

Der Erfindung liegt die Aufgabe zu Grunde einen gegenüber dem Stand der Technik verbesserten Verbundwerkstoff bereitzustellen, insbesondere einen Verbundwerkstoff für einen Stator- und/oder Rotorpaket bereitzustellen, der hinsichtlich seiner Eigenschaften mit einem monolithischen Elektroband vergleichbar ist.

Gelöst wird diese Aufgabe durch einen Verbundwerkstoff mit den Merkmalen des Patentanspruchs 1.

Vorteilhafte Ausgestaltungen und Varianten der Erfindung ergeben sich aus den abhängigen Ansprüchen und der nachfolgenden Beschreibung.

Erfindungsgemäß ist vorgesehen, dass der Verbundwerkstoff, insbesondere zur Anwendung in einem Stator- und/oder Rotorpaket eine erste und eine zweite Elektrobandschicht und eine dazwischen angeordnete polymere Schicht umfasst, wobei die polymere Schicht aus einem vernetzten hochmolekularen Acrylat-basierten Copolymer besteht und eine Schichtdicke im Bereich von 3 bis 20 µm aufweist.

Überraschenderweise hat sich gezeigt, dass der erfindungsgemäße Verbundwerkstoff im Vergleich zu aus dem Stand der Technik bekannten Verbundwerkstoffen definierte weichmagnetische Eigenschaften aufweist, die im Bereich von monolithischen Elektrobandblechen liegen.

Vorzugsweise weist der Verbundwerkstoff einen Verlust bei P1,0; 50 Hz im Bereich von 0,7 bis 7 W/kg und bei P1,5; 50 Hz im Bereich von 1,9 bis 15 W/kg und/oder eine Feldstärke bei J2500 im Bereich von 1,49 bis 1,7 T und bei J5000 im Bereich von 1,6 bis 1,8 T ermittelt nach DIN EN 60404-2 auf.

In einer bevorzugteren Ausführungsform weist der Verbundwerkstoff einen Verlust bei P1,0; 50 Hz im Bereich von 1,0 bis 1,5 W/kg und bei P1,5; 50 Hz im Bereich von 2,4 bis 3,3 W/kg und/oder eine Feldstärke bei J2500 im Bereich von 1,49 bis 1,57 T und bei J5000 im Bereich von 1,60 bis 1,65 T ermittelt nach DIN EN 60404-2 auf.

Ganz besonders bevorzugt weist der Verbundwerkstoff einen Verlust im Bereich von
- P1,0; 50 Hz im Bereich von 1,3 bis 1,5 W/kg und bei P1,5; 50 Hz im Bereich von 2,8 bis 3,3 W/kg und/oder eine Feldstärke bei J2500 im Bereich von 1,49 bis 1,55 T und bei J5000 im Bereich von 1,60 bis 1,65 T, oder
- P1,0; 50 Hz im Bereich von 1,35 bis 1,5 W/kg und bei P1,5; 50 Hz im Bereich von 3,0 bis 3,3 W/kg und/oder eine Feldstärke bei J2500 im Bereich von 1,49 bis 1,57 T und bei J5000 im Bereich von 1,60 bis 1,65 T, oder
- P1,0; 50 Hz im Bereich von 1,0 bis 1,1 W/kg und bei P1,5; 50 Hz im Bereich von 2,4 bis 2,8 W/kg und/oder eine Feldstärke bei J2500 im Bereich von 1,52 bis 1,54 T und bei J5000 im Bereich von 1,61 bis 1,63 T ermittelt nach DIN EN 60404-2.

Weiterhin hat sich überraschenderweise gezeigt, dass der erfindungsgemäße Verbundwerkstoff im Anwendungsbereich eines Stator- und/oder Rotorpakets einen vergleichbaren Eisenfüllfaktor aufweist.

Vorzugsweise beträgt der Eisenfüllfaktor in einem Stator- und/oder Rotorpaket unter Verwendung des erfindungsgemäßen Verbundwerkstoffs 96,0 % bis 99,0 %, mehr bevorzugt 97,8 % bis 99,0 %, noch mehr bevorzugt 98,3 bis 98,9 und am meisten bevorzugt 98,5 % bis 98,8 %.

Durch den Einsatz des erfindungsgemäßen Verbundwerkstoffs kann nicht nur aktiv der entstehende Körperschall im Elektromotor signifikant reduziert, sondern zudem durch beispielsweise Variation der eingesetzten Elektrobandblechdicken entweder ein weiterer Kostenvorteil und/oder eine erhöhte Effizienz generiert werden.

Dadurch, dass die polymere Schicht aus einem vernetzten hochmolekularen Acrylat-basierten Copolymer besteht können die Vibrationen und/oder Schwingungen verbessert aufgenommen und in Wärmeenergie umgewandelt werden. Hierdurch wird eine signifikante Reduzierung der Motoreigenschwingung (Körperschall) erreicht, sodass der Einsatz von sekundären Akustikmaßnahmen deutlich reduziert oder sogar vollständig entfallen kann. Dies führt zu einem Gewichtsvorteil gegenüber herkömmlichen Elektromotoren und somit zu einer Erhöhung der Reichweite von E-Autos.

Die Ummagnetisierungsverluste von Elektrobandblechen hängen sehr stark von den Dicken bzw. von dem Querschnitt der eingesetzten Bleche ab. In der Regel gilt, dass je kleiner die Schichtdicke des Elektrobands ist, desto geringer fällt der Verlust aus. Durch die Verwendung des erfindungsgemäßen Verbundblechs können - im Vergleich zu einem monolithischen Elektroband mit einer Dicke von beispielsweise 0,5 mm - zwei Elektrobänder der gleichen Qualität mit einer Dicke von 0,25 mm miteinander verklebt werden. Bezogen auf einen Motortyp kann dadurch entweder die Effizienz des Motors signifikant erhöht oder der Bau eines kleineren Motors mit gleicher Effizienz ermöglicht werden. Letzteres würde einen Gewichtsvorteil mit sich bringen. Ferner ist auch die Verwendung eines Elektrobands geringerer Qualität möglich. Hierdurch kann ein Motor mit gleicher Effizienz hergestellt werden, der im Vergleich zum obigen Motortyp kostengünstiger herstellbar ist.

In der Praxis kommen die Verbundwerkstoffe selbst als auch die daraus erzeugten Bauteile teilweise in Kontakt mit unterschiedlichen teils sehr aggressiven Ölen, die die polymere Schicht angreifen können und somit zu einer Delamination führen. Es ist daher wünschenswert, dass die polymere Schicht gegen solche technischen Öle beständig ist. So hat sich gezeigt, dass wenn sich das vernetzte hochmolekulare Acrylat-basierte Copolymer vorzugsweise aus einer copolymerisierten Mischung von mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit, einer ungesättigte Carbonsäure-Monomereinheit, und einem Vernetzer zusammensetzt, kein Aufquellen der polymeren Schicht oder Delamination des Verbundwerkstoffs erkennbar ist.

In einer mehr bevorzugten Ausführungsform setzt sich das vernetzte hochmolekulare Acrylat-basierte Copolymer ausschließlich aus den beiden Komponenten, der copolymerisierten Mischung und dem Vernetzer, zusammen.

In einer weiter bevorzugten Ausführungsform besteht die copolymerisierte Mischung aus mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit und einer ungesättigte Carbonsäure-Monomereinheit.

Vorzugsweise ist die Glycidyl-Monomereinheit ausgewählt aus der Gruppe bestehend aus Allylglycidylether, Glycidylacrylatester, Glycidylmethacrylatester und/oder Mischungen hiervon.

Vorzugsweise weist die Alkylacrylatester-Monomereinheit und/oder Alkylmethacrylatester-Monomereinheit eine Alkylgruppe mit 4 bis 12 Kohlenstoffatomen auf.

Sofern die polymere Schicht eine Glassübergangstemperatur von höher -15 °C aufweist kann gemäß einer bevorzugten Ausführungsform der zu copolymerisierenden Mischung eine Alkylacrylatester-Monomereinheit und/oder Alkylmethacrylatester-Monomereinheit mit einer Alkylgruppe mit 1 bis 4 Kohlenstoffatomen zugegeben werden.

Gemäß einer bevorzugten Ausführungsform setzt sich das vernetzte hochmolekulare Acrylat-basierte Copolymer aus einer copolymerisierten Mischung von mindestens 55 bis 85 Gew.-% einer Alkylacrylatester-Monomereinheit und/oder Alkylmethacrylatester-Monomereinheit, wobei beide eine Alkylgruppe mit 4 bis 12 Kohlenstoffatomen aufweisen, 0 bis 35 Gew.-% einer Alkylacrylatester-Monomereinheit und/oder Alkylmethacrylatester-Monomereinheit, wobei beide eine Alkylgruppe mit 1 bis 4 Kohlenstoffatomen aufweisen, 0,01 bis 2 Gew.-% einer Glycidyl-Monomereinheit, 1 bis 15 Gew.-%, mehr bevorzugt 3 bis 13 Gew.-% einer ungesättigte Carbonsäure-Monomereinheit, und 0,05 bis 1 Gew.-% eines Vernetzers zusammen.

Vorzugsweise weist die copolymerisierte Mischung eine mittlere molare Masse im Bereich von 500 bis 1500 kDa, mehr bevorzugt 600 bis 1000 kDa, noch mehr bevorzugt 700 bis 900 kDa, am meisten bevorzugt 800 kDa ± 20 kDa auf. Die mittlere molare Masse wird hierbei mittels GPC ermittelt. Zur Kalibrierung wurde Polystyrolstandard verwendet.

Vorzugsweise wird die Alkylacrylatester-Monomereinheit und/oder Alkylmethacrylatester-Monomereinheit, aufweisend eine Alkylgruppe mit 4 bis 12 Kohlenstoffatomen ausgewählt aus 2-Ethylhexylacrylat, Isooctylacrylat, Acrylsäurebutylester, 2-Methylbutyl-acrylat, 4-Methyl-2-pentyl-acrylat, Isodecylmethacrylat, Acrylsäuremethylester, Acrylsäureethylester, Methacrylsäuremethylester und/oder einer Mischung hiervon.

Vorzugsweise wird die ungesättigte Carbonsäure-Monomereinheit ausgewählt aus Acrylsäure, Methacrylsäure, Fumarsäure und/oder einer Mischung hiervon. Bevorzugte Mischungen setzen sich zusammen aus Acrylsäure und Methacrylsäure, aus Acrylsäure und Fumarsäure oder aus Methacrylsäure und Fumarsäure.

Gemäß einer bevorzugten Ausführungsform wird die Copolymerisation unter Zuhilfenahme eines Lösungsmittelgemisches, vorzugsweise eines Gemisches aus Essigsäureethylester und Aceton, durchgeführt. Bevorzugt weist das Lösungsmittelgemisch ein Verhältnis aus, das einen Rückfluss im Bereich von 68 bis 78 °C erlaubt.

Vorzugsweise beträgt der Feststoffanteil während der Copolymerisation im Bereich von 40 bis 60 Gew.-% auf.

Für die Copolymerisation wird vorzugsweise AIBN als Radikalstarter verwendet.

Weiterhin wird die Copolymerisation vorzugsweise unter einer Stickstoffatmosphäre durchgeführt, so dass ein hochmolekulares Copolymer, vorzugsweise mit einer mittleren Molmasse von ≥ 500 kDa erzielt wird.

Vorzugsweise ist der Vernetzer ausgewählt aus Aluminiumacetylacetonat (AIACA) Eisenacetylacetonat (FeACA), Titanacetylacetonat (TiACA) oder Zirkoniumacetylacetonat (ZrACA).

Gemäß einer weiteren bevorzugten Ausführungsform weist die Elektrobandschicht eine Schichtdicke im Bereich von 50 bis 1500 µm, mehr bevorzugt im Bereich von 50 bis 1000 µm, noch mehr bevorzugt im Bereich von 50 bis 750 µm und am meisten bevorzugt im Bereich von 50 bis 650 µm auf.

Zur Herstellung des erfindungsgemäßen Verbundwerkstoffs können zwei gleich dicke oder unterschiedlich dicke Elektrobandschichten verwendet werden.

Bevorzugt ist das Elektroband ein kornorientiertes oder ein nicht-kornorientiertes Elektroband. Ein kornorientiertes Elektroband wird beim Bau von Transformatoren, ein nicht kornorientiertes bei Bau von E-Motoren oder Generatoren eingesetzt.

Um Kurzschlüsse zwischen zwei Elektrobändern zu verhindern werden die Elektrobandschichten gemäß einer bevorzugten Ausgestaltung mit einer Isolationsschicht versehen, um eine elektrische Abschirmung zu erzielen. Vorzugsweise weist die Elektrobandschicht eine Isolationsschicht mit einer Schichtdicke im Bereich von 0,5 bis 5 µm, mehr bevorzugt 1 bis 1,5 µm auf.

Die Isolationsschicht kann aus einem organischen Polymer wie beispielsweise einem Acrylat-, Alkyd-, Epoxid-, Melamin-, Phenol-, Polyamid-, Polyester- und Polyurethanharz oder einer Mischung hiervon bestehen. Gemäß einer anderen bevorzugten Variante kann das organische Polymer weitere anorganische Komponenten, beispielsweise Aluminiumphosphat, Pigmente und/oder Füllstoffe, wie beispielsweise Titandioxid, Bariumsulfat, Calciumcarbonat (Kaolin), Siliziumdioxid oder Zinksulfid) enthalten.

In einer besonders bevorzugten Ausführungsvariante besteht die Isolationsschicht aus einem thermisch aktivierbaren Klebstoff.

Gemäß einer anderen bevorzugten Ausführungsform weist die polymere Schicht eine Schichtdicke im Bereich von 3 bis 10 µm, mehr bevorzugt 4 bis 8 µm, am meisten bevorzugt im Bereich von 4,5 bis 7,5 µm auf.

Gemäß einem weiteren Aspekt betrifft die vorliegende Erfindung ein Verfahren zur kontinuierlichen Herstellung eines Verbundwerkstoffs umfassend die Verfahrensschritte:
- Bereitstellen einer ersten Elektrobandschicht,
- Beschichten der ersten Elektrobandschicht mit einem polymeren Mittel, bestehend aus einem hochmolekularen Acrylat-basierten Copolymer und einem Vernetzer,
- Erwärmen der beschichteten ersten Elektrobandschicht,
- Bereitstellen und erwärmen einer zweiten Elektrobandschicht,
- Laminieren der beiden Elektrobandschichten, so dass ein Verbundwerkstoff mit einer polymeren Schicht bestehend aus einem vernetzten hochmolekularen Acrylat-basierten Copolymer mit einer Schichtdicke im Bereich von 3 bis 20 µm erhalten wird.

Vorzugsweise wird die erste Elektrobandschicht als auch die zweite Elektrobandschicht als Coil bereitgestellt, so dass ein kontinuierliches Verfahren zu Herstellung des erfindungsgemäßen Verbundwerkstoffs realisiert werden kann.

Vorzugsweise erfolgt die Beschichtung der ersten Elektrobandschicht mittels eines Coaters. Hierdurch wird eine homogene Schicht des polymeren Mittels auf die erste Elektrobandschicht appliziert. Die Applikation erfolgt derart, dass der Verbundwerkstoff nach dem Schritt des Laminierens eine polymere Schicht mit einer Schichtdicke im Bereich von 3 bis 20 µm, vorzugsweise 3 bis 10 µm, mehr bevorzugt im Bereich von 4 bis 8 µm und am meisten bevorzugt im Bereich von 4,5 bis 7,5 µm aufweist.

In einer bevorzugten Ausführungsform wird die unbeschichtete Seite des Elektrobands mit dem polymeren Mittel beschichtet.

Gemäß einer weiteren bevorzugten Ausführungsform findet zwischen dem Schritt des Bereitstellens der ersten Elektrobandschicht und dem Auftragen der polymeren Schicht eine Vorbehandlung der ersten Elektrobandschicht statt. Vorzugsweise handelt es sich bei der Vorbehandlung um eine Reinigung. Hierbei wird die Oberfläche des eingesetzten Elektrobands von anhaftenden Schmutzpartikeln sowie Ölen befreit und somit auf die Applikation mit dem polymeren Mittel vorbereitet.

In einer bevorzugten Ausführungsform wird das hochmolekulare Acrylat-basierte Copolymer von einer copolymerisierten Mischung von mindestens einer Alkylacrylatester-Monomereinheit und/oder Alkylmethacrylatester-Monomereinheit, wobei beide eine Alkylgruppe mit 1 bis 12 Kohlenstoffatomen aufweisen, einer Glycidyl-Monomereinheit, und einer ungesättigte Carbonsäure-Monomereinheit gebildet.

Vorzugsweise werden die Elektrobandschichten auf eine Temperatur im Bereich von 150 bis 250 °C, mehr bevorzugt im Bereich von 160 bis 190 °C, weiter bevorzugt im Bereich von 175 bis 185 °C erwärmt. Das Erwärmen der Elektrobandschichten kann mittels konventioneller Öfen oder mittels Induktion erfolgen. Entsprechende Techniken sind dem Fachmann bekannt.

Das Laminieren der beiden temperierten Elektrobandschichten erfolgt vorzugsweise mittels einer Dublierstation. Hierbei wird die erste Elektrobandschicht, auf die das polymere Mittel aufgetragen wurde mit der zweiten Elektrobandschicht zusammengeführt, so dass der erfindungsgemäße Verbundwerkstoff erhalten wird.

Der noch heiße Verbundwerkstoff durchläuft in der Regel eine Abkühlstrecke, wo er sich auf Raumtemperatur abkühlt und anschließend zu einem Coil gewickelt wird.

Gemäß einer besonders bevorzugten Ausführungsvariante wird in einer nächsten Prozessetappe ein thermisch aktivierbarer Klebstoff mittels eines Coil-Coatings Verfahrens auf eine, mehr bevorzugt auf beide Seiten des Verbundwerkstoffs aufgetragen. Dieser kann teil-, mehr bevorzugt vollflächig auf den Verbundwerkstoff aufgetragen werden.

Gemäß einem weiteren Aspekt betrifft die vorliegende Erfindung einen Verbundwerkstoff hergestellt durch das erfindungsgemäße Verfahren.

Bevorzugt weist ein derart hergestellter Verbundwerkstoff mit im Vergleich zu aus dem Stand der Technik bekannten Verbundwerkstoffen weichmagnetische Eigenschaften auf, die im Bereich von monolithischen Elektrobandblechen liegen.

Vorzugsweise weist der Verbundwerkstoff einen Verlust bei P1,0; 50 Hz im Bereich von 0,7 bis 7 W/kg und bei P1,5; 50 Hz im Bereich von 1,9 bis 15 W/kg und/oder eine Feldstärke bei J2500 im Bereich von 1,49 bis 1,7 T und bei J5000 im Bereich von 1,6 bis 1,8 T ermittelt nach DIN EN 60404-2 auf.

In einer bevorzugteren Ausführungsform weist der Verbundwerkstoff einen Verlust bei P1,0; 50 Hz im Bereich von 1,0 bis 1,5 W/kg und bei P1,5; 50 Hz im Bereich von 2,4 bis 3,3 W/kg und/oder eine Feldstärke bei J2500 im Bereich von 1,49 bis 1,57 T und bei J5000 im Bereich von 1,60 bis 1,65 T ermittelt nach DIN EN 60404-2 auf.

Ganz besonders bevorzugt weist der Verbundwerkstoff einen Verlust im Bereich von
- P1,0; 50 Hz im Bereich von 1,3 bis 1,5 W/kg und bei P1,5; 50 Hz im Bereich von 2,8 bis 3,3 W/kg und/oder eine Feldstärke bei J2500 im Bereich von 1,49 bis 1,55 T und bei J5000 im Bereich von 1,60 bis 1,65 T, oder
- P1,0; 50 Hz im Bereich von 1,35 bis 1,5 W/kg und bei P1,5; 50 Hz im Bereich von 3,0 bis 3,3 W/kg und/oder eine Feldstärke bei J2500 im Bereich von 1,49 bis 1,57 T und bei J5000 im Bereich von 1,60 bis 1,65 T, oder
- P1,0; 50 Hz im Bereich von 1,0 bis 1,1 W/kg und bei P1,5; 50 Hz im Bereich von 2,4 bis 2,8 W/kg und/oder eine Feldstärke bei J2500 im Bereich von 1,52 bis 1,54 T und bei J5000 im Bereich von 1,61 bis 1,63 T ermittelt nach DIN EN 60404-2.

In einem weiteren Aspekt betrifft die vorliegende Erfindung ein Statorpaket enthaltend eine Vielzahl Lagen des erfindungsgemäßen Verbundwerkstoffs oder eines Verbundwerkstoffs hergestellt nach dem erfindungsgemäßen Verfahren.

In einem weiteren Aspekt betrifft die vorliegende Erfindung ein Rotorpaket enthaltend eine Vielzahl Lagen des erfindungsgemäßen Verbundwerkstoffs oder eines Verbundwerkstoffs hergestellt nach dem erfindungsgemäßen Verfahren.

Das erfindungsgemäße Stator- und/oder Rotorpaket kann vorzugsweise einen homogenen oder heterogenen Aufbau aufweisen. Ein homogener Aufbau besteht aus einer Vielzahl Lagen des erfindungsgemäßen Verbundwerkstoffs. Ein heterogener Aufbau besteht aus einer Vielzahl Lagen des erfindungsgemäßen Verbundwerkstoffs und dazwischen angeordneten monolithischen Elektrobandlagen. Beispielsweise kann der Aufbau eine Anordnung aufweisen, in der jede dritte Lage aus einem monolithischen Elektroband besteht.

In einem weiteren Aspekt betrifft die vorliegende Erfindung einen Elektromotor enthaltend ein erfindungsgemäßes Stator- und/oder Rotorpaket.

In einem weiteren Aspekt betrifft die vorliegende Erfindung einen Generator enthaltend ein erfindungsgemäßes Stator- und/oder Rotorpaket.

Ein weiterer Aspekt der vorliegenden Erfindung betrifft ferner ein Verfahren zur Herstellung eines Stator- und/oder Rotorpakets umfassend die Schritte:
- Bereitstellen eines erfindungsgemäßen Verbundwerkstoffs oder eines Verbundwerkstoffs hergestellt nach dem erfindungsgemäßen Verfahren,
- Abtrennen einer Vielzahl an Lamellen aus dem Verbundwerkstoff, und
- Verbinden der Lamellen zu einem Stator- und/oder Rotorpaket.

Das Abtrennen der Lamellen aus dem Verbundwerkstoff, der vorzugsweise als Coil vorliegt, kann beispielsweise mittels eines geeigneten Stanz- oder Schneidwerkzeugs erfolgen. Die abgetrennten Lamellen werden anschließend zu einem Paket gestapelt und miteinander verbunden.

Dadurch, dass bereits ein vorzugsweise als Coil vorliegender Verbundwerkstoff bereitgestellt wird, ergibt sich ein Prozessvorteil beim Abtrennen gegenüber der Herstellung des Statorund/oder Rotorpakets unter Verwendung eines monolithischen Elektrobandblechs, da zur Bereitstellung eines Stator- und/oder Rotorpakets mit der gleichen Dicke nur die Hälfte der Abtrennschritte erforderlich wird.

Das Verbinden der Lamellen erfolgt vorzugsweise mittels Stanzpakettieren, dabei wird zwischen den einzelnen Lamellen eine mechanische Verbindung erzeugt. Diese Verbindung wird durch Erhöhungen gebildet, die in die einzelnen Lamellen gestanzt wird.

Gemäß einer bevorzugteren Ausführungsvariante werden die einzelnen Lamellen miteinander verklebt. Vorzugsweise wird zum Verkleben ein thermisch aktivierbarer Klebstoff verwendet. Das Verkleben kann teil-, mehr bevorzugt vollflächig mit dem thermisch aktivierbaren Klebstoff erfolgen. Dieser kann vor, während oder nach dem Stapeln der Lamellen aktiviert werden. Somit kann der thermisch aktivierbare Kleber über die verschiedenen Prozessschritte aktiviert und damit in einen klebrigen Zustand gebracht werden, so dass eine zeitliche und/oder räumliche Trennung gegeben ist.

Alternativ kann auch ein sog. Backlack oder eine punktförmige Klebeverbindung zum Verkleben der Lamellen verwendet werden.

In einem weiteren Aspekt wird die Verwendung des erfindungsgemäßen Verbundwerkstoffs zur Herstellung eines Stators und/oder eines Rotors für einen Elektromotor und/oder einen Generator beschrieben.

Im Folgenden wird die Erfindung anhand von Beispielen näher erläutert.

### Beispiele

Zunächst wurde ein polymeres Mittel bestehend aus einem hochmolekularen Acrylat-basierten Copolymer und einem Vernetzer hergestellt.

Hierzu wurde eine Monomerenlösung aus 207 g Acrylsäurebutylester, 61,2 g 2-Ethylhexylacrylat, 23,1 g Acrylsäure und 0,1 g 2,3-Epoxypropylmethacrylat hergestellt. Aus der Monomerenlösung wurden sodann 68,5 g entnommen und einem 1,5 Liter großen Reaktor zugeführt, der mit Stickstoff gespült war. Der Reaktor war mit einer Rühreinrichtung, einem Rückflusskühler und einem Thermistor ausgestattet. Anschließend wurden 29,7 g Essigsäureethylester und 18 g Aceton der Monomerenlösung zugegeben. Die Lösung wurde unter Rückfluss erhitzt. Sodann wurden 0,05 g AIBN (Dupont) in 4,5 g Essigsäureethylester gelöst und der unter Rückfluss siedenden Lösung zugegeben. Die Lösung wurde dann unter starkem Rückfluss 15 Minuten lang gehalten. Die verbliebene Monomerenlösung wurde mit 195 g Essigsäureethylester, 40 g Aceton und 0,24 g AIBN vermischt und als Lösung der im Reaktor unter Rückfluss siedenden Lösung konstant über 3 Stunden zugegeben. Nach beendeter Zugabe wurde die Lösung für eine zusätzliche Stunde unter Rückfluss gehalten. Anschließend wurde eine Lösunge aus 0,12 g AIBN, 9 g Essigsäureethylester und 4 g Aceton dem Reaktor zugegeben und die Lösung für eine weitere Stunde unter Rückfluss gehalten. Dieser Vorgang wurde noch zweimal wiederholt. Nach beendeter Zugabe wurde die Lösung für eine weitere Stunde unter Rückfluss gehalten. Anschließend wurden 178 g Toluol und 27 g n-Heptan. Das erhaltene Rohprodukt wies einen Feststoffanteil von 36 Gew.-% und eine Viskosität von 8000 Pa.s auf. Die Viskosität wurde mit Viskosimeter der Firma Brookfield ermittelt (#4 Spindel, 12 U/min). Das erhaltene Copolymer bestand aus 71 Gew.-% Essigsäure-n-butylester, 21 Gew.- % 2-Ethylhexylacrylat, 8 Gew.-% Acrylsäure und 0,03 Gew.-% 2,3-Epoxypropylmethacrylat. Das Copolymer wurde anschließend mit 0,1 Gew.-% Aluminiumacetylacetonat vermischt, um das polymere Mittel zu erhalten.

### Beispiel 1

Unter Verwendung des polymeren Mittels wurden drei Verbundwerkstoffe hergestellt. Hierzu wurden jeweils zwei Elektrobänder der Elektrobandsorten 280-30 AP (Dicke 300 µm), M 330-35 A (Dicke 350 µm) und M 330-50 A (Dicke 500 µm), wobei jedes Band einseitig mit einem Elektroisolierlack (Stabolit^{®} 20) beschichtet war (Schichtdicke 1 µm), mittels eines Laminierverfahrens verklebt.

Das entsprechende Elektroband (DIN A4 Format) wurde auf der unbeschichteten Seite mittels eines Laborcoaters mit dem polymeren Mittel beschichtet. Das polymere Mittel wurde in einer Menge aufgetragen, die einer Schichtdicke von 6 µm ± 1 µm im fertigen Verbundwerkstoff entspricht. Anschließend wurde die jeweilige Probe in einem Umluftofen 1 min bei 110 °C vorgetrocknet, um das Lösungsmittel zu entfernen. Für den Laminierprozess sind die entsprechenden Proben in einem Labor-Durchlaufofen (Ofenzeit ca. 50 s) auf 170 - 190 °C erhitzt worden. Unmittelbar nach Erreichen der PMT (Peak-Metal-Temperature) wurde die Probe mit der ebenfalls auf 170 - 190 °C erwärmten zweiten Elektrobandschicht unter Druck (30 bis 35 N/mm) in einem Walzenstuhl laminiert.

Der erhaltende Verbundwerkstoff hatte eine Gesamtdicke von 608 µm ± 1 µm, 708 ± 1 µm bzw. 1008 µm ± 1 µm.

Die erhaltenen Verbundwerkstoffe wurden hinsichtlich der akustischen, magnetischen und Haftungseigenschaften charakterisiert. In der nachfolgenden Tabelle sind die Ergebnisse im Vergleich zu einem entsprechenden monolithischen Elektroband gleicher Qualität bzw. einem aus dem Stand der Technik bekannten Verbundwerkstoff dargestellt.

| | Verbundwerkstoff gemäß Beispiel 1 | | |
|---|---|---|---|
| | 280-30 AP | M 330-35 A | M 330-50 A |
| Akustische Eigenschaften (500 Hz) | Verlustfaktor 0,102 / Prüftemperatur 80 °C Obersttest DIN EN ISO 6721-3 | Verlustfaktor 0,112 / Prüftemperatur 80 °C Obersttest DIN EN ISO 6721-3 | Verlustfaktor 0,114 / Prüftemperatur 80 °C Obersttest DIN EN ISO 6721-3 |
| Magnetische Eigenschaften (Frequenz 50Hz / M-Lage) | P1,0 T - 1,07 W/kg P1,5 T - 2,46 W/kg J2500 A/m - 1548 mT J5000 A/m - 1641 mT | P1,0 T - 1,11 W/kg P1,5 T - 2,68 W/kg J2500 A/m - 1561 mT J5000 A/m - 1652 mT | P1,0 T - 1,43 W/kg 0 P1,5 T - 3,25 W/kg J2500 A/m - 1586 mT J5000 A/m - 1676 mT |
| Haftung (Schälprüfung) | 18 N/4cm DIN EN ISO 8510-2 (in Anlehnung) | 14 N/4cm DIN EN ISO 8510-2 (in Anlehnung) | 11 N/4cm DIN EN ISO 8510-2 (in Anlehnung) |

| | Monolithische Elektrobandsorten | | |
|---|---|---|---|
| | 280-30 AP | M 330-35 A | M 330-50 A |
| Akustische Eigenschaften (500 Hz) | Verlustfaktor ≥ 0,001 / Prüftemperatur 80 °C Obersttest DIN EN ISO 6721-3 | Verlustfaktor ≥ 0,001 / Prüftemperatur 80 °C Obersttest DIN EN ISO 6721-3 | Verlustfaktor ≥ 0,001 / Prüftemperatur 80 °C Obersttest DIN EN ISO 6721-3 |
| Magnetische Eigenschaften (Frequenz 50Hz / M-Lage) | P1,0 T - 1,05 W/kg P1,5 T - 2,37 W/kg J2500 A/m - 1532 mT J5000 A/m - 1622 mT | P1,0 T - 1,13 W/kg P1,5 T - 2,58 W/kg J2500 A/m - 1579 mT J5000 A/m - 1666 mT | P1,0 T - 1,42 W/kg P1,5 T - 3,13 W/kg J2500 A/m - 1591 mT J5000 A/m - 1678 mT |
| Haftung (Schälprüfung) | --- | --- | --- |
| | Standard Verbundwerkstoff | | |
| | bondal^{®} CPT / Kernschichtdicke 40µm / Einzeldeckblechdicke 0,6 mm | | |
| Akustische Eigenschaften (500 Hz) | Verlustfaktor 0,323 / Prüftemperatur 80 °C Obersttest DIN EN ISO 6721-3 | | |
| Magnetische Eigenschaften | --- | | |
| Haftung (Schälprüfung) | 142 N/4cm DIN EN ISO 8510-2 (in Anlehnung) | | |

Ferner wurde die Beständigkeit der polymeren Schicht untersucht. Hierzu wurden von den erhaltenen Verbundwerkstoffen entsprechend zugeschnittene Prüfkörper (2,5 x 10cm) für 164 h bei 120 °C in eine entsprechende Prüfflüssigkeit (Getriebeöl Shell ATF 134 FE; Transformatorenöl Nynas Nytro Taurus (IEC 60296) Ed. 4 - Standard grade) gelegt. Nach Ablauf der Belastungszeit wurden die Prüfkörper visuell untersucht. Hierbei konnte weder eine Delamination noch eine Aufquellung der polymeren Schicht nachgewiesen werden.

### Kurze Beschreibung der Zeichnungen

Im Folgenden wird die Erfindung anhand von Zeichnungen näher erläutert. Im Einzelnen zeigen:
- Fig. 1: eine erste Ausführungsvariante des erfindungsgemäßen Verbundwerkstoff,
- Fig. 2: eine zweite Ausführungsvariante des erfindungsgemäßen Verbundwerkstoffs,
- Fig. 3: einen mehrlagigen Aufbau unter Verwendung des Verbundwerkstoffs gemäß der zweiten Ausführungsvariante,
- Fig. 4: ein Prozessschema zur Herstellung des erfindungsgemäßen Verbundwerkstoffs, und
- Fig. 5: ein Diagramm einer Verlustfaktormessung nach DIN EN ISO 6721-3 bei 500 Hz für einen Verbundwerkstoff gemäß Beispiel 1 Variante 280-30 AP.

### Beschreibung der bevorzugten Ausführungsformen

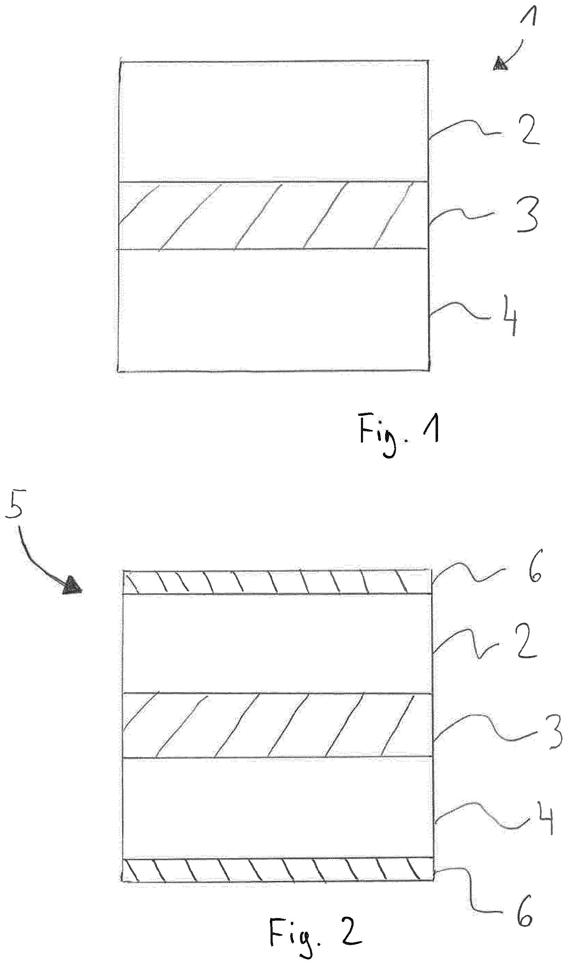

In Fig. 1 ist ein dreischichtiger Aufbau eines erfindungsgemäßen Verbundwerkstoffs 1 gemäß einer ersten Ausführungsform gezeigt. Der Verbundwerkstoff 1 umfasst eine erste Elektrobandschicht 2, eine zweite Elektrobandschicht 4 und eine dazwischen angeordnete polymere Schicht 3.

Fig. 2 zeigt eine zweite Ausführungsvariante des erfindungsgemäßen Verbundwerkstoffs 5 mit einer ersten und zweiten Elektrobandschicht 2, 4 und einer dazwischen angeordneten polymeren Schicht 3. Auf der zu polymeren Schicht 3 gegenüberliegenden Seite weisen die beiden Elektrobandschichten 2, 4 jeweils eine Isolationsschicht 6 auf. Gemäß einer bevorzugten Ausführungsvariante wird diese durch einen thermisch aktivierbaren Klebstoff gebildet.

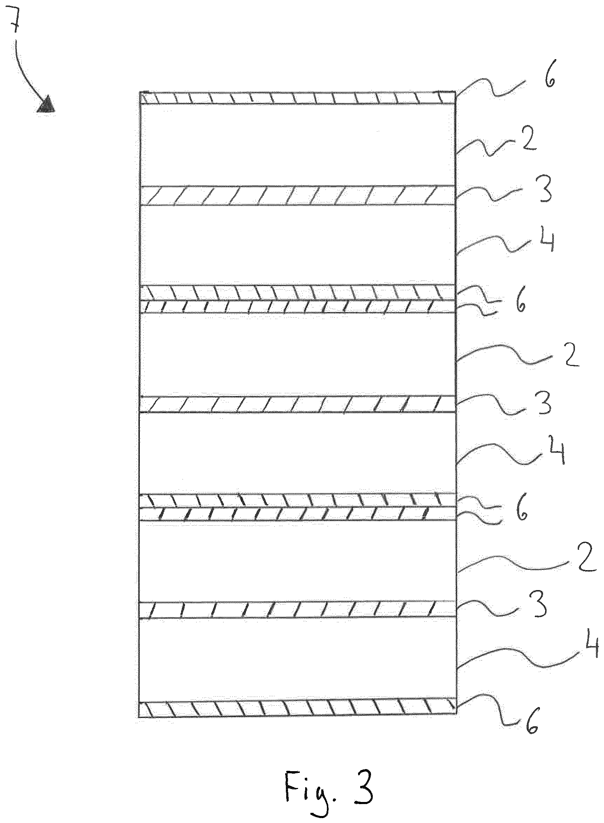

In Fig. 3 ist ein mehrlagiger Aufbau 7 unter Verwendung des Verbundwerkstoffs 5 gemäß der zweiten Ausführungsvariante gezeigt. Die einzelnen Lagen des Verbundwerkstoffs 5 sind hierbei zu einem Stapel übereinander angeordnet. Sofern die Isolationsschicht 6 durch einen thermisch aktivierbaren Klebstoff gebildet wird, weist der mehrlagige Aufbau 7 eine homogene Isolationsschicht 6 zwischen den einzelnen Lamellen auf (nicht gezeigt).

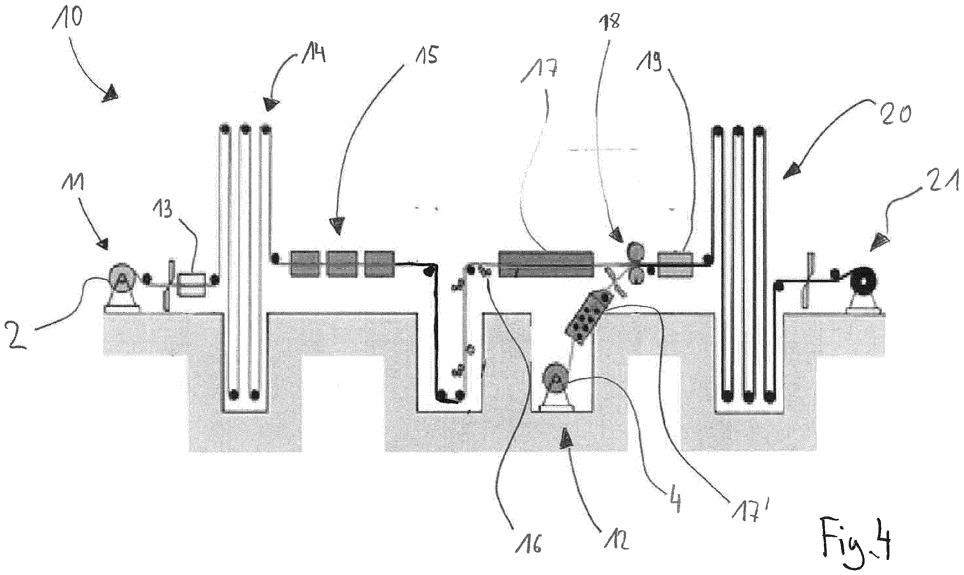

Fig. 4 zeigt ein Prozessschema zur kontinuierlichen Herstellung des erfindungsgemäßen Verbundwerkstoffs 1, 5 mittels einer Bandbeschichtungsanlage 10. Die Anlage 10 weist eine erste und eine zweite Bandabrollstation 11, 12 auf, mit der eine erste und zweite Elektrobandschicht 2, 4 bereitgestellt wird. Ferner weist die Anlage 10 eine Heftvorrichtung 13 und einen ersten und zweiten Bandspeicher 14, 20 auf, die einen Wechsel eines Coils erlauben, ohne dass der Prozess unterbrochen werden muss. Die erste Elektrobandschicht 2 wird ggf. zunächst einer Vorbehandlungsstufe 15 zugeführt, um die Oberfläche der Elektrobandschicht 2 von anhaftenden Schmutzpartikeln sowie Ölen zu befreien. Anschließend wird über eine Auftragswalze 16 das polymere Mittel (nicht dargestellt) einseitig aufgetragen. Die mit dem polymeren Mittel beschichtete Elektrobandschicht 2 durchläuft sodann einen 2-Zonen-Ofen 17, in dem die aufgetragene Beschichtung bei 100 - 120 °C vorgetrocknet wird. Hierbei wird das Lösungsmittel entfernt. In der zweiten Zone des Ofens 17 wird die Elektrobandschicht 2 auf die PMT (170 - 190 °C) erhitzt. Ferner wird eine zweite Elektrobandschicht 4 von der zweiten Abrollstation 12 bereitgestellt und zunächst einer Aufheizstation 17 zugeführt, in der die zweite Elektrobandschicht 4 ebenfalls auf die PMT erwärmt wird. In einer Dublierstation 18 werden beiden Elektrobandschichten 2, 4 unter einem Druck von 5 kN und bei einer Temperatur von 150-170 °C miteinander zu dem Verbundwerkstoff 1, 5 laminiert. Anschließend durchläuft der noch heiße Verbundwerkstoff 1, 5 eine Kühlstation, wo er sich auf Raumtemperatur abkühlt und anschließend zu einem Coil auf einer Bandaufrollstation 21 gewickelt wird.

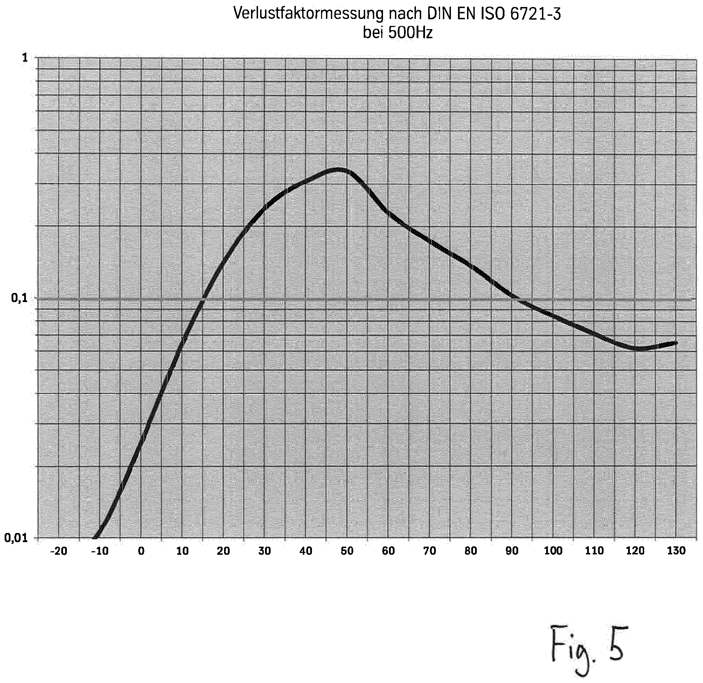

In Fig. 5 ist ein Diagramm einer Verlustfaktormessung für das Beispiel 1 Variante 280-30 AP gezeigt. Die Messung wurde entsprechend der DIN EN ISO 6721-3 bei 500 Hz durchgeführt. Hierzu wurden Prüfstreifen (250 x 15 mm) verwendet, wobei eine freie Länge von 200 mm vorhanden sein musste. Die Prüfstreifen waren gerichtet und entgratet. Ein Aufkleben eines metallischen Plättchens war nicht notwendig, Es zeigt sich, dass der Verbundwerkstoff einen Verlustfaktor im Bereich von 0,1 bis 0,25 in einem Temperaturbereich von 15 bis 90 °C aufweist. Ein Verlustfaktor von größer 0,1 bedeutet, dass der Werkstoff ein vollständig bedämpfter Werkstoff ist.

### Bezugszeichenliste

- 1: Verbundwerkstoff
- 2: erste Elektrobandschicht
- 3: polymere Schicht
- 4: zweite Elektrobandschicht
- 5: Verbundwerkstoff
- 6: Isolationsschicht
- 7: mehrlagiger Aufbau
- 10: Bandbeschichtungsanlage
- 11: Bandabrollstation
- 12: Bandabrollstation
- 13: Heftvorrichtung
- 14: Bandspeicher
- 15: Vorbehandlungsstufe
- 16: Auftragswalze
- 17: Aufheizstation
- 18: Dublierstation
- 19: Kühlstation
- 20: Bandspeicher
- 21: Bandaufrollstation

## Patentansprüche

1. Verbundwerkstoff, insbesondere zur Anwendung in einem Stator- und/oder Rotorpaket umfassend
- eine erste und eine zweite Elektrobandschicht, und
- eine dazwischen angeordnete polymere Schicht, wobei die polymere Schicht aus einem vernetzten hochmolekularen Acrylat-basierten Copolymer besteht und eine Schichtdicke im Bereich von 3 bis 20 µm aufweist.

2. Verbundwerkstoff nach Anspruch 1, wobei das vernetzte hochmolekulare Acrylat-basierte Copolymer sich zusammensetzt aus
- einer copolymerisierten Mischung von mindestens
- einer Alkylacrylatester-Monomereinheit und/oder Alkylmethacrylatester-Monomereinheit, wobei beide eine Alkylgruppe mit 1 bis 12 Kohlenstoffatomen aufweisen,
- einer Glycidyl-Monomereinheit,
- einer ungesättigten Carbonsäure-Monomereinheit, und
- einem Vernetzer.

3. Verbundwerkstoff nach Anspruch 2, wobei die copolymerisierte Mischung eine mittlere molare Masse im Bereich von 500 bis 1500 kDa aufweist, wie mittels GPC ermittelt.

4. Verbundwerkstoff nach einem der vorhergehenden Ansprüche 1 bis 3, wobei die Elektrobandschicht eine Schichtdicke im Bereich von 50 bis 1500 µm aufweist.

5. Verbundwerkstoff nach einem der vorhergehenden Ansprüche 1 bis 4, wobei die Elektrobandschicht eine Isolationsschicht mit einer Schichtdicke im Bereich von 0,5 bis 2 µm aufweist.

6. Verbundwerkstoff nach einem der vorhergehenden Ansprüche, aufweisend einen Verlust bei P1,0; 50 Hz im Bereich von 0,7 bis 7 W/kg und bei P1,5; 50 Hz im Bereich von 1,9 bis 15 W/kg und/oder eine Feldstärke bei J2500 im Bereich von 1,49 bis 1,7 T und bei J5000 im Bereich von 1,6 bis 1,8 T ermittelt nach DIN EN 60404-2.

7. Verfahren zur kontinuierlichen Herstellung eines Verbundwerkstoffs umfassend die Verfahrensschritte:
- Bereitstellen einer ersten Elektrobandschicht,
- Beschichten der ersten Elektrobandschicht mit einem polymeren Mittel bestehend aus einem hochmolekularen Acrylat-basierten Copolymer und einem Vernetzer,
- Erwärmen der beschichteten ersten Elektrobandschicht,
- Bereitstellen und erwärmen einer zweiten Elektrobandschicht,
- Laminieren der beiden Elektrobandschichten, so dass ein Verbundwerkstoff mit einer polymeren Schicht bestehend aus einem vernetzten hochmolekularen Acrylat-basierten Copolymer mit einer Schichtdicke im Bereich von 3 bis 20 µm erhalten wird.

8. Verfahren nach Anspruch 7, wobei das hochmolekulare Acrylat-basierte Copolymer aus einer copolymerisierten Mischung von mindestens
- einer Alkylacrylatester-Monomereinheit und/oder Alkylmethacrylatester-Monomereinheit, wobei beide eine Alkylgruppe mit 1 bis 12 Kohlenstoffatomen aufweisen,
- einer Glycidyl-Monomereinheit, und
- einer ungesättigten Carbonsäure-Monomereinheit gebildet wird.

9. Verfahren nach Anspruch 7 oder 8, wobei die Elektrobandschichten auf eine Temperatur im Bereich von 150 bis 250 °C erwärmt werden.

10. Statorpaket enthaltend eine Vielzahl Lagen eines Verbundwerkstoffs nach einem der Ansprüche 1 bis 6 oder hergestellt durch das Verfahren nach einem der Ansprüche 7 bis 9.

11. Rotorpaket enthaltend eine Vielzahl Lagen eines Verbundwerkstoffs nach einem der Ansprüche 1 bis 6 oder hergestellt durch das Verfahren nach einem der Ansprüche 7 bis 9.

12. Elektromotor enthaltend ein Statorpaket und/oder ein Rotorpaket nach einem der vorhergehenden Ansprüche 10 oder 11.

13. Generator enthaltend ein Statorpaket und/oder ein Rotorpaket nach einem der vorhergehenden Ansprüche 10 oder 11.

14. Verfahren zur Herstellung eines Stator- und/oder Rotorpakets umfassend die Schritte:
- Bereitstellen eines Verbundwerkstoffs nach einem der Ansprüche 1 bis 6 oder hergestellt durch das Verfahren nach einem der Ansprüche 7 bis 9,
- Abtrennen einer Vielzahl an Lamellen aus dem Verbundwerkstoff, und
- Verbinden der Lamellen zu einem Stator- und/oder Rotorpaket.

## Claims

1. Composite material, especially for use in a stator stack and/or rotor stack, comprising
- a first and a second electrical steel strip layer, and
- a polymeric layer arranged in between, where the polymeric layer consists of a crosslinked acrylate-based copolymer of high molecular weight and has a layer thickness in the range from 3 to 20 µm.

2. Composite material according to Claim 1, wherein the crosslinked acrylate-based copolymer of high molecular weight is composed of
- a copolymerized mixture of at least
- an alkyl acrylate ester monomer unit and/or alkyl methacrylate ester monomer unit, where each has an alkyl group having 1 to 12 carbon atoms,
- a glycidyl monomer unit,
- an unsaturated carboxylic acid monomer unit, and
- a crosslinker.

3. Composite material according to Claim 2, wherein the copolymerized mixture has an average molar mass in the range from 500 to 1500 kDa, as determined by GPC.

4. Composite material according to any of the preceding Claims 1 to 3, wherein the electrical steel strip layer has a layer thickness in the range from 50 to 1500 µm.

5. Composite material according to any of the preceding Claims 1 to 4, wherein the electrical steel strip layer has an insulation layer having a layer thickness in the range from 0.5 to 2 µm.

6. Composite material according to any of the preceding claims, having a loss at P1.0; 50 Hz in the range from 0.7 to 7 W/kg and at P1.5; 50 Hz in the range from 1.9 to 15 W/kg and/or a field strength at J2500 in the range from 1.49 to 1.7 T and at J5000 in the range from 1.6 to 1.8 T, determined to DIN EN 60404-2.

7. Process for continuously producing a composite material, comprising the process steps of:
- providing a first electrical steel strip layer,
- coating the first electrical steel strip layer with a polymeric composition consisting of an acrylate-based copolymer of high molecular weight and a crosslinker,
- heating the coated first electrical steel strip layer,
- providing and heating a second electrical steel strip layer,
- laminating the two electrical steel strip layers, so as to obtain a composite material having a polymeric layer consisting of a crosslinked acrylate-based copolymer of high molecular weight having a layer thickness in the range from 3 to 20 µm.

8. Process according to Claim 7, wherein the acrylate-based copolymer of high molecular weight is formed from a copolymerized mixture of at least
- an alkyl acrylate ester monomer unit and/or alkyl methacrylate ester monomer unit, where each has an alkyl group having 1 to 12 carbon atoms,
- a glycidyl monomer unit, and
- an unsaturated carboxylic acid monomer unit.

9. Process according to Claim 7 or 8, wherein the electrical steel strip layers are heated to a temperature in the range from 150 to 250°C.

10. Stator stack comprising a multitude of layers of a composite material according to any of Claims 1 to 6 or produced by the process according to any of Claims 7 to 9.

11. Rotor stack comprising a multitude of layers of a composite material according to any of Claims 1 to 6 or produced by the process according to any of Claims 7 to 9.

12. Electric motor comprising a stator stack and/or a rotor stack according to either of the preceding Claims 10 and 11.

13. Generator comprising a stator stack and/or a rotor stack according to either of the preceding Claims 10 and 11.

14. Process for producing a stator stack and/or rotor stack, comprising the steps of:
- providing a composite material according to any of Claims 1 to 6 or produced by the process according to any of Claims 7 to 9,
- separating a multitude of lamellae from the composite material, and
- bonding the lamellae to form a stator stack and/or rotor stack.

## Revendications

1. Matériau composite, destiné notamment à être utilisé dans un noyau de stator et/ou de rotor, ledit matériau composite comprenant
- une première et une deuxième couche de feuillard électrique, et
- une couche polymère disposée entre les deux, la couche polymère comprenant un copolymère réticulé à base d'acrylate à haut poids moléculaire et ayant une épaisseur de couche dans la plage de 3 à 20 µm.

2. Matériau composite selon la revendication 1, le copolymère réticulé à base d'acrylate à haut poids moléculaire comprenant
- un mélange copolymérisé d'au moins
- un motif monomère d'ester d'acrylate d'alkyle et/ou un motif monomère d'ester de méthacrylate d'alkyle, tous les deux comportant un groupe alkyle de 1 à 12 atomes de carbone,
- un motif monomère glycidyle,
- un motif monomère d'acide carboxylique insaturé, et
- un réticulant.

3. Matériau composite selon la revendication 2, le mélange copolymérisé ayant un poids moléculaire moyen dans la plage de 500 à 1500 kDa tel que déterminé par GPC.

4. Matériau composite selon l'une des revendications précédentes 1 à 3, la couche de feuillard électrique ayant une épaisseur de couche dans la plage allant de 50 à 1500 µm.

5. Matériau composite selon l'une des revendications précédentes 1 à 4, la couche de feuillard électrique comportant une couche isolante d'une épaisseur de couche dans la plage allant de 0,5 à 2 µm.

6. Matériau composite selon l'une des revendications précédentes, présentant une perte à P1,0 ; 50 Hz dans la plage de 0,7 à 7 W/kg et à P1,5 ; 50 Hz dans la plage de 1,9 à 15 W/kg et/ou une intensité de champ pour J2500 dans la plage de 1,49 à 1,7 T et pour J5000 dans la plage de 1,6 à 1,8 T déterminée selon DIN EN 60404-2.

7. Procédé de fabrication en continu d'un matériau composite, ledit procédé comprenant les étapes suivantes :
- fournir une première couche de feuillard électrique,
- revêtir la première couche de feuillard électrique d'un agent polymérique comprenant un copolymère à base d'acrylate à haut poids moléculaire et un réticulant,
- chauffer la première couche de feuillard électrique revêtue,
- fournir et chauffer une deuxième couche de feuillard électrique,
- stratifier les deux couches de feuillard électrique de manière à obtenir un matériau composite pourvu d'une couche de polymère comprenant un copolymère réticulé à base d'acrylate à haut poids moléculaire et ayant une épaisseur de couche dans la plage allant de 3 à 20 µm.

8. Procédé selon la revendication 7, le copolymère à base d'acrylate à haut poids moléculaire comprenant un mélange copolymérisé d'au moins
- un motif monomère d'ester d'acrylate d'alkyle et/ou un motif monomère d'ester de méthacrylate d'alkyle, tous les deux comportant un groupe alkyle de 1 à 12 atomes de carbone,
- un motif monomère glycidyle, et
- une unité monomère d'acide carboxylique insaturé.

9. Procédé selon la revendication 7 ou 8,
les couches de feuillard électrique étant chauffées à une température dans la plage de 150 à 250 °C.

10. Noyau de stator contenant une pluralité de couches d'un matériau composite selon l'une des revendications 1 à 6 ou réalisé par le procédé selon l'une des revendications 7 à 9.

11. Noyau de rotor contenant une pluralité de couches d'un matériau composite selon l'une des revendications 1 à 6 ou réalisé par le procédé selon l'une des revendications 7 à 9.

12. Moteur électrique contenant un noyau de stator et/ou un noyau de rotor selon l'une des revendications précédentes 10 ou 11.

13. Générateur contenant un noyau de stator et/ou un noyau de rotor selon l'une des revendications précédentes 10 ou 11.

14. Procédé de réalisation d'un noyau de stator et/ou de rotor, ledit procédé comprenant les étapes suivantes :
- fournir un matériau composite selon l'une des revendications 1 à 6 ou réalisé par le procédé selon l'une des revendications 7 à 9,
- détacher une pluralité de lamelles du matériau composite, et
- relier les lamelles pour former un noyau de stator et/ou de rotor.
